# EUROPÄISCHE PATENTSCHRIFT

(11) **EP 1 812 291 B1**
(45) Veröffentlichungstag und Bekanntmachung des Hinweises auf die Patenterteilung: **21.10.2009**
(21) Anmeldenummer: 05807551.6
(22) Anmeldetag: 03.11.2005
(51) Int. Cl.: B64F 1/26, E04H 6/44

(54) **LÄRMSCHUTZEINRICHTUNG FÜR FLUGZEUGE**
NOISE INSULATION DEVICE FOR AIRCRAFT
SYSTEME D'INSONORISATION POUR AVION

(30) Priorität: 03.11.2004 DE 202004016965 U
(43) Veröffentlichungstag der Anmeldung: 01.08.2007
(73) Patentinhaber: Gesellschaft für Lärmschutz mbH, 22605 Hamburg (DE)
(72) Erfinder: MEYER, Thomas, J., 22605 Hamburg (DE)
(74) Vertreter: Glawe, Delfs, Moll
(86) Internationale Anmeldenummer: PCT/EP2005/011781
(87) Internationale Veröffentlichungsnummer: WO 2006/048289

(56) Entgegenhaltungen:
- WO-A-98/06625
- DE-U1- 20 020 851
- GB-A- 1 089 630
- US-A- 2 420 186
- US-A- 3 739 537
- US-A- 4 004 382

## Beschreibung

Flugzeugtriebwerke müssen nach Wartungsarbeiten, insbesondere nach Reparaturarbeiten in einem Probelauf geprüft werden. Dabei entsteht beträchtlicher Lärm, der abgeschirmt werden muss, insbesondere wenn er den Betrieb der Triebwerke unter Volllast einschließt.

Bei einer bekannten Lärmschutzeinrichtung der eingangs genannten Art (WO 98/06625) wird das Flugzeug rückwärts in eine Lärmschutzhalle hineingefahren. Die in der Regel voll überdachte Halle muss dabei eine beträchtliche Höhe haben, um das Seitenleitwerk aufnehmen zu können, oder es muss im Dach ein Schlitz für das Seitenleitwerk vorgesehen sein, der dann nach Hineinfahren des Flugzeugs in die Lärmschutzhalle verschlossen werden muss. Die Öffnung, in die das Flugzeug hineingefahren ist, wird dann durch Tore verschlossen, die Leitflächen aufweisen, die den nach vorne austretenden Schall dämpfen und andererseits die einströmende Luft so umlenken, dass sie ungefähr in Längsrichtung des Flugzeugs in die Triebwerke strömt.

Diese vorbekannte Lärmschutzhalle kann zwar sehr effektiv gestaltet werden, was die Dämpfung des nach außen dringenden Lärms betrifft. Ihr Bau ist aber mit großen Kosten verbunden. Einerseits muss das Dach freitragend über die gesamte Länge des Flugzeugs große Entfernungen zwischen den Seitenwänden überdecken, was bei den großen Spannweiten moderner Großraumflugzeuge sehr teure und aufwendige Dachkonstruktionen erforderlich macht. Andererseits müssen die schweren türartigen Elemente, die die Leitflächen tragen, zum Hineinrollen der Flugzeuge geöffnet werden können. Dies erfordert nicht nur aufwendige Roll- und Antriebssysteme. Vielmehr müssen die Leitflächen, da sie freitragend stehen, auch sehr stabil ausgebildet sein. Ein weiterer Nachteil besteht darin, dass die vorbekannte Lärmschutzhalle nicht erweiterbar ist.

Eine weitere Lärmschutzeinrichtung ist auch aus DE 20020851 U bekannt, welches alle Merkmale des Oberbegriffs der unabhängigen Ansprüche 1 und 2 offenbart.

Die Aufgabe der Erfindung besteht in der Schaffung einer Lärmschutzeinrichtung für Flugzeuge der eingangs genannten Art, die kostengünstiger herzustellen ist und leichter erweiterbar ist.

Die erfindungsgemäße Lösung besteht darin, dass die Größe der rückwärtigen Öffnung durch an den Wänden vorgenommene Änderungen veränderbar gehalten wird. Hierdurch wird ermöglicht, dass sich diese zweite Öffnung durch die an den Wänden vorgenommenen Änderungen so weit vergrößern lässt, dass das Flugzeug von hinten in die Lärmschutzhalle hineingefahren werden kann. Bei einer ersten Ausführungsform der Erfindung (Anspruch 1) ist zudem vorgesehn, dass die Wände so abgewinkelt sind, dass sich der von ihnen eingeschlossene Bereich von der ersten Öffnung zur zweiten Öffnung hin verjüngt, dass das Dach nur einen der ersten Öffnung benachbarten Teil der Lärmschutzeinrichtung überdeckt und dass die Wände wenigstens zum Teil um vertikale Achsen schwenkbar oder in Längsrichtung verschiebbar sind. Bei einer alternativen Ausführungsform der Erfindung (Anspruch 2) ist vorgesehen, dass mindestens ein Teil der Wände in Längsrichtung derselben verschiebbar ist, dass der verschiebbare Teil der Wände quer zur Längsachse der Lärmschutzeinrichtung in unterschiedlichen Winkeln, z. B. unter einem rechten Winkel, ausgerichtet und mit Öffnungen für den Durchlass der Triebwerksstrahlen des Flugzeugs ausgebildet ist.

Die seitlichen Wände, die beim Probelauf der Triebwerke einen sich verjüngenden Bereich vor der rückwärtigen zweiten Öffnung bilden, können also einmal so weit auseinandergeschwenkt werden, dass sich dieser Bereich nicht mehr verjüngt. Das Flugzeug kann dann durch die zweite Öffnung, also von hinten, in die Lärmschutxeinrichtung hineingefahren werden. Ferner wird ermöglicht, nur den vorderen Teil des Flugzeugs unter das Dach zu fahren; der hintere Teil bleibt dann ohne Überdachung. Das Dach kann dabei eine niedrigere Höhe aufweisen, als wenn auch das Seitenleitwerk mit unter das Dach verfahren werden müsste. Zusätzlich kann der erwähnte Schlitz in der Dachkonstruktion vermieden werden. Da das Flugzeug von hinten in die Überdachung hineingefahren wird, braucht die Dachkonstruktion auch allenfalls in einem viel kleineren Bereich die gesamte Spannweite des Flugzeugs überspannen.

Im gesamten Bereich, mindestens jedoch weitaus überwiegend, kann die Dachfläche zudem nach unten mit Stützsäulen abgestützt sein, die lediglich in der Mitte so weit voneinander entfernt sein müssen, dass der Flugzeugrumpf zwischen sie eingefahren werden kann. Dadurch wird die Dachkonstruktion nicht nur stark vereinfacht, sondern gleichzeitig wesentlich verbilligt.

Nach dem Einfahren des Flugzeugs kann dann die zweite Öffnung soweit wieder.verkleinert werden, wie es die Abschirmung der Schallabstrahlung, insbesondere zur Seite hin, erfordert.

Die Luft strömt dabei durch die Leitflächen in ähnlicher Weise wie beim Stand der Technik ein. Es ist aber nicht mehr erforderlich, die schweren Leitflächen zu verfahren. Sie bilden vielmehr starre und feststehende Elemente, die zwecksmäßig auch permanent mit dem Dach verbunden sein können, wodurch ihre Stabilität erhöht wird.'Auch dies führt zu erheblichen Verbilligungen.

Bei einer Ausführungsform ist vorgesehen, dass die Wände nach dem Einfahren des Flugzeugs so abgewinkelt sind, dass sich der von ihnen eingeschlossene Bereich von der ersten Öffnung zur zweiten Öffnung hin verjüngt, dass das Dach nur einen der ersten Öffnung benachbarten Teil der Lärmschutzeinrichtung überdeckt, und dass die Wände wenigstens zum Teil um vertikale Achsen schwenkbar sind, so dass das Flugzeug beim Einrollen nicht behindert wird.

Ist das Flugzeug in die Lärmschutzeinrichtung hineingefahren, so werden die Wände so weit zurückgeschwenkt, dass sich der Bereich zwischen ihnen zur zweiten Öffnung hin in den zur Gewährleistung der Abschirmeinrichtung erforderlichen Umfang verjüngt.

Das Dach muss in der Mittelachse der Einrichtung die Höhe des größten in Frage kommenden Flugzeugrumpfes und zur Seite hin eine Höhe haben, die das Einrollen der Tragflächen nicht behindert. Die seitlichen Wände, die insbesondere hinter dem Dach schwenkbar angebracht sind, können aber eine geringere Höhe haben. Diese Höhe muss lediglich verhindern, dass Schall sich in unerwünschter Weise zu den Seiten hin ausbreiten kann.

Die Änderung an den Wänden, mit denen die Größe der zweiten Öffnung verändert wird, kann auch darin bestehen, dass die Wände verschiebbar sind. Insbesondere kann bei der abgewickelten Anordnung der Wände vorgesehen sein, dass die Wände nicht wie bei der vorstehenden Ausführungsform verschwenkbar, sondern in der Art von Schiebetoren verschiebbar sind. Die Größe der zweiten Öffnung kann dabei ebenso wie bei der Ausführungsform mit verschwenkbaren Wänden verändert werden.

Bei einer anderen Ausführungsform ist vorgesehen, dass die verschiebbaren Wände entlang der Dachkante in verschiedenen Winkeln zur Längsachse der Lärmschutzeinrichtung insbesondere unter einem rechten Winkel, ausgerichtet sind, wobei zur Vermeidung eines Anblasens der Wände durch die Triebwerksstrahlen des Flugzeugs in den verschieblichen Wänden entsprechende Öffnungen für den Durchlass des Abgasstrahls ausgebildet sind. Die Lärmschutzhalle ist in diesem Falle mit Ausnahme des nach außen durchtretenen Flugzeugrumpfes und der erwähnten Öffnungen im wesentlichen vollständig geschlossen.

Es ist auch möglich, die vorstehend beschriebenen Wände aus einzelnen dicht nebeneinander angeordneten freistehenden Elementen zu bilden, die mit Hilfe geeigneter Einrichtungen verfahrbar und zu den gewünschten Wandbereichen zusammengesetzt werden können. Die erforderlichen Öffnungen für die Triebwerksstrahlen und den Bereich des Flugzeugrumpfes können bei dieser Ausführungsform dann auch geschaffen werden, indem an den entsprechenden Stellen die freistehenden Elemente entfallen.

Die mit der Erfindung verbundenen zahlreichen Kosteneinsparungen sind offensichtlich. Die verschwenkbaren, verschiebbaren oder transportierbaren Wände, die die Form der zweiten Öffnung bestimmen, können dabei in vorteilhafter Weise mehrere Funktionen abdecken:
1.Sie gestatten eine beliebige Anpassung der akustischen Abschirmwirkung an die örtlichen Gegebenheiten durch unterschiedlich wählbare Wandhöhen und Wandlängen.
2.Sie sind in der Lage, die akustische Abschirmwirkung mit der Verhinderung einströmender Außenluft von hinten in die Öffnung hinein zu kombinieren. Von hinten einströmende Außenluft muss beim Anlassen der Triebwerke verhindert werden. Sie kann zu erheblichen Schäden an den Triebwerken führen.
3.Sie gestatten problemlos durch Verschwenkung der Seitenwände nach außen eine spätere Erweiterung der Halle, wenn größere, insbesondere breitere Flugzeuge in Verkehr gebracht werden.
4.Sie sind bei einer zusätzlichen Erweiterung der Dachfläche nicht hinderlich, die bei weiter hinten gelegenen Triebwerken erforderlich werden kann. Die Dachfläche kann dann z. B. an einem einfachen Tragwerk abgehängt werden, das nachträglich unabhängig von den darunter schwenkbaren Wänden montiert wird.
5.Da die akustische Abschirmwirkung keine hohen Gewichte erfordert, können die Seitenwände nachträglich in der Höhe vergrößert werden, wenn der Dachabstand wegen höher gelegener Tragflächen im erweiterten Teil vergrößert werden muss. Das spart bei einer Erweiterung erhebliche Baukosten.
6.Die Lärmschutzeinrichtung der Erfindung funktioniert witterungsunabhängig. Hierdurch ermöglicht sie eine von der vorherrschenden Windrichtung im wesentlichen unabhängige Aufstellungsrichtung. Dies kommt den Wünschen der Nutzer entgegen. Insbesondere wird eine sehr kostenaufwendige zusätzliche Betonierung von Einrollflächen für die Flugzeuge vermieden.

Der Lärm braucht häufig nach hinten in dem Bereich hinein, in dem die Abgase ausströmen, nicht abgeschirmt zu werden. Die entsprechende Öffnung kann daher frei bleiben, wenn sich dort ein genügend großer unbesiedelter Raum befindet (z. B. die Flächen des Flughafens).

Bei Bedarf kann jedoch auch in diesem Bereich bei einer vorteilhaften Ausführungsform vorgesehen sein, dass die Lärmschutzeinrichtung hinter verschwenkbaren, die sich verjüngenden Seitenwände im nicht überdachten Bereich eine zur Schließung der zweiten Öffnung verfahrbare Wand aufweist. Die verfahrbare Wand ist dabei vorteilhafterweise mit ihrer zur Öffnung hin gerichteten Seite mit einer Schrägfläche versehen, mit der die Abgase nach oben geleitet werden. Um dem Druck der von den Triebwerken ausgestoßenen Abgase standhalten zu können, ist die verfahrbare Wand auf ihrer von der zweiten Öffnung weggerichteten Stelle mit Stützen versehen, die in vorteilhafter Weise zugleich eine windabweisende Form erhalten können, durch die auf die zweite Öffnung gerichtete Luftströmungen nach oben umgelenkt werden. Entsprechende Anordnungen können auch an der Innenseite der verschwenkbaren Wände vorgesehen werden.

Auch diese Wand kann aus mehreren Elementen aufgebaut werden, die mit Hilfe geeigneter Einrichtungen transportiert werden können.

Die Erfindung wird im folgenden anhand von vorteilhaften Ausführungsformen unter Bezugnahme auf die beigefügten Zeichnungen beispielsweise beschrieben. Es zeigen:
- Fig. 1: eine erste Ausführungsform der Lärmschutzeinrichtung der Erfindung mit eingefahrenem Flugzeug von oben;
- Fig. 2: eine Ansicht von der Seite der verfahrbaren Wand, mit der die hintere Öffnung der Lärmschutzeinrichtung abgedeckt werden kann;
- Fig. 3: in ähnlicher Darstellung wie in Fig. 1 eine zweite Ausführungsform der Lärmschutzeinrichtung der Erfindung;
- Fig. 4: in ähnlicher Darstellung wie in Fig. 1 eine dritte Ausführungsform der Lärmschutzeinrichtung der Erfindung;
- Fig. 5: eine perspektivische Darstellung einer verfahrbaren Wand der dritten Ausführungsform der Erfindung; und
- Fig. 6: Wandelemente, aus denen die erfindungsgemäßen Wände aufgebaut werden können.

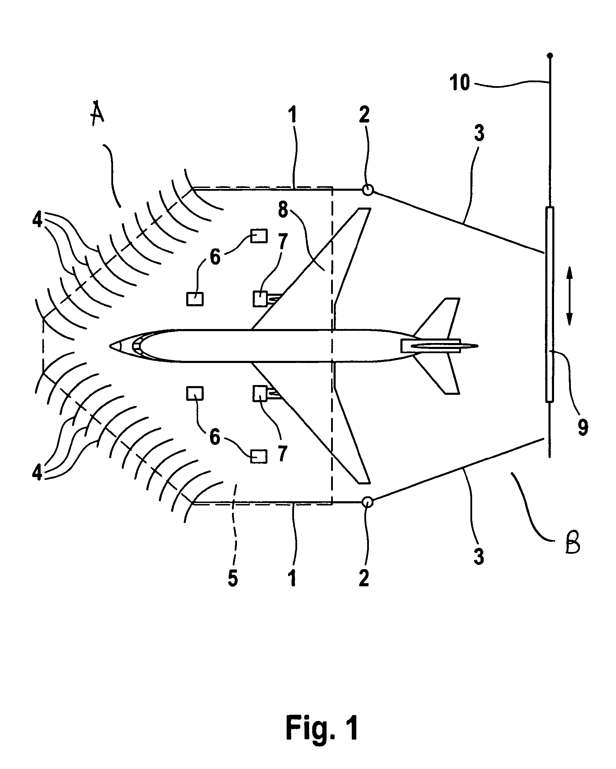

In Fig. 1 ist eine erste Ausführungsform der erfindungsgemäßen Lärmschutzeinrichtung gezeigt, die feste Seitenwände 1, bei 2 angelenkte schwenkbare Wände 3, eine Gruppe von Leitflächen 4 und ein bei 5 gestrichelt angedeutetes Dach aufweist. Das Dach wird dabei durch Stützen 6 sowie von den Seitenwänden 1 und den Leitflächen 4 abgestützt.

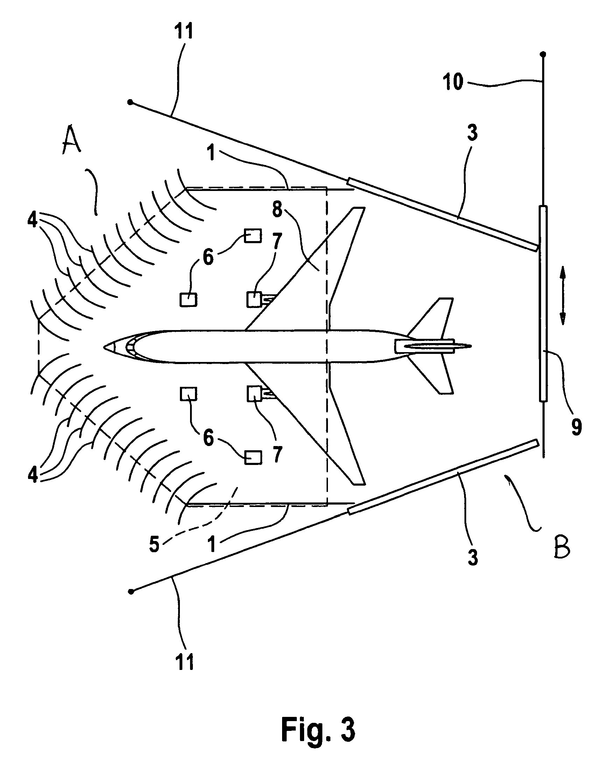

Die beweglichen Wände 3, die z. B. auch nach Art von Rolltoren geführt werden können, sind in Fig. 1 und 3 in der Stellung gezeigt, in der die Triebwerke 7 des Flugzeugs 8 getestet werden sollen. Das Flugzeug ist dabei bis in den Bereich der Tragflächen unter das Dach 5 verfahren. Wenn das Flugzeug 8 aus der Lärmschutzeinrichtung herausgefahren oder in diese hineingefahren werden soll, werden die Wände 3 so weit erforderlich nach außen geschwenkt bzw. ausgerollt.

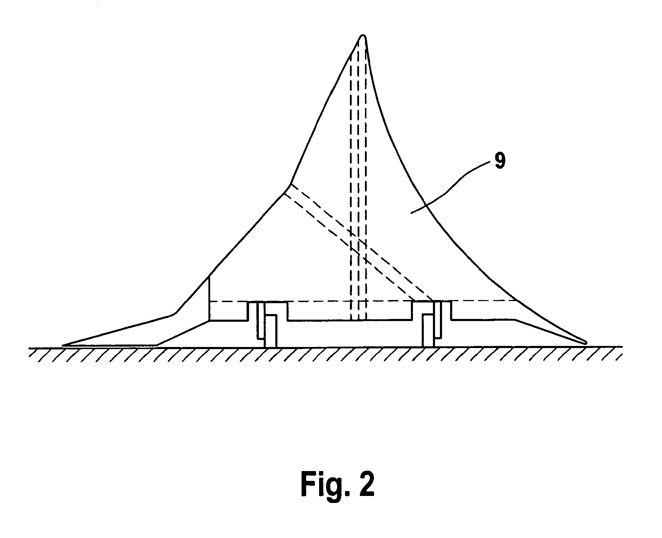

Die hintere Öffnung der Lärmschutzeinrichtung der Erfindung kann durch eine fahrbare Wand 9 verschlossen werden, die auf Schienen 10 verfahrbar ist. Diese Wand ist in Fig. 2 von der Seite gezeigt. Sie weist auf beiden Seiten für die Umlenkung geeignete Verkleidungsflächen auf, mit der die Abgase einerseits und von hinten zuströmende Luft andererseits nach oben umgelenkt werden. Insbesondere sind die Verkleidungsflächen schräg oder gewölbt oder weisen mehrere Teilflächen auf, die eine Wölbung annähern.

Die festen Wände 1 und die Leitflächen 4 reichen vorteilhafterweise bis an das Dach 5 heran, während die Wände 3 und die verfahrbare Wand 9 im nicht überdachten Bereich eine geringere, an die zu stellenden Anforderungen angepasste Höhe haben können. Trotz dieser geringeren Höhe ist die Umlenkung der Abgase und die Schallabschirmung nach hinten in dem erforderlichen Umfang gewährleistet und andererseits verhindert, dass seitlicher Wind einfallen kann, der die Funktion der Triebwerke beeinträchtigt.

In der Ausführungsform der Fig. 3 sind die Wände 3 nicht verschwenkbar, sondern in Wandrichtung 11 verfahrbar. Ansonsten entspricht die Geometrie beim Triebwerkslauf aber der Ausführungsform der Fig. 1. Sind die Wände 3 in die Öffnungsstellung verfahren, hat man genauso viel Platz wie bei der ersten Ausführungsform zum Hinein- und Herausfahren des Flugzeugs.

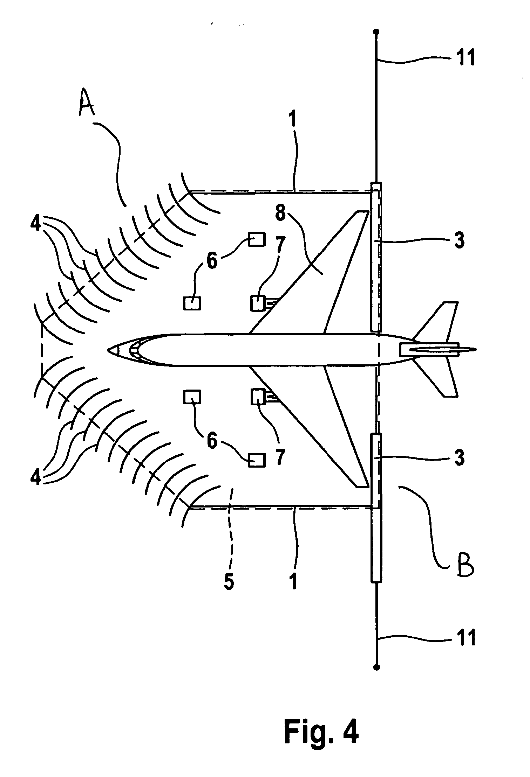

Bei der Ausführungsform der Fig. 4 sind die Wände wie in Fig. 3 verfahrbar, schließen jedoch in Querrichtung an die Dachfläche an. In Fig. 4 ist oben eine herein gefahrene Wand 3, unten eine teilweise herausgefahrene Wand 3 gezeigt. Bei dieser Ausführungsform erstreckt sich das Dach 5 über die gesamte Lärmschutzeinrichtung. Bei einem Verfahren bis hinter die Triebwerke müssen dann in den Wänden 3 Öffnungen vorgesehen sein, durch die die Triebwerksstrahlen heraustreten können.

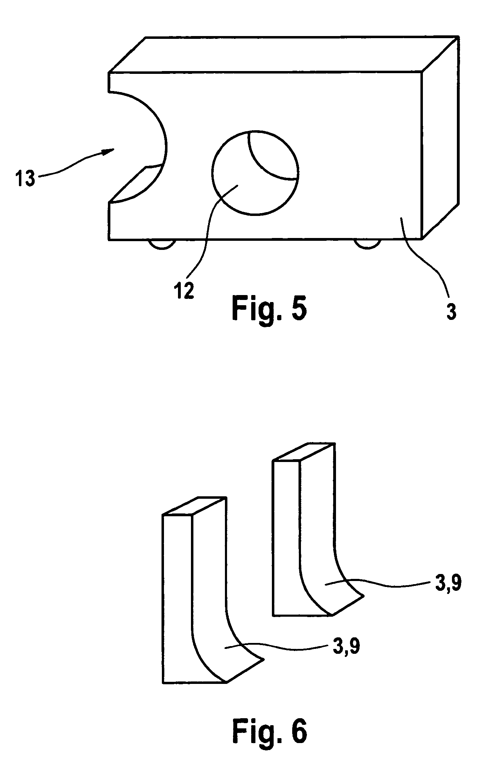

Falls aus akustischen Gründen erforderlich, kann auch eine entsprechende Ausnehmung für den Flugzeugrumpf vorgesehen werden. In Fig. 5 ist eine entsprechende Wand 3 mit einer Öffnung 12 für den Triebwerksstrahl und einer Ausnehmung 13 für den Flugzeugrumpf gezeigt.

Die Ausführungsform der Fig. 6 zeigt Wandelemente 3, die einzeln verfahrbar sind und zu Wänden zusammengesetzt werden können. Dabei können, um den Ausnehmungen 12, 13 entsprechende Freiräume zu schaffen, an den entsprechenden Stellen Wandelemente 3 jeweils herausgelassen werden.

## Patentansprüche

1. Lärmschutzeinrichtung für Flugzeuge (8) mit einer ersten Öffnung, die mit einer Reihe von Leitflächen (4) begrenzt ist, deren Innenrand im Horizontalschnitt ins Innere der Lärmschutzeinrichtung und deren Außenrand zur Seite gerichtet ist und die die einströmende Luft so umlenken, dass sie ungefähr in Längsrichtung des Flugzeugs in die Triebwerke strömt, mit einem Dach (5) und mit einer der ersten Öffnung gegenüberliegenden hinteren zweiten Öffnung, die von Wänden (1, 3) begrenzt ist, **dadurch gekennzeichnet, dass** die Größe der zweiten Öffnung durch Bewegung eines Teils der Wände (3) veränderbar ist, so dass das Flugzeug durch diese von hinten in die Lärmschutzhalle hineingefahren werden kann, dass die Wände (3) so abgewinkelt sind, dass sich der von ihnen eingeschlossene Bereich von der ersten Öffnung zur zweiten Öffnung hin verjüngt, dass das Dach (5) nur einen der ersten Öffnung benachbarten Teil der Lärmschutzeinrichtung überdeckt und dass die Wände (3) wenigstens zum Teil um vertikale Achsen schwenkbar oder in Längsrichtung verschiebbar sind.

2. Lärmschutzeinrichtung für Flugzeuge (8) mit einer ersten Öffnung, die mit einer Reihe von Leitflächen (4) begrenzt ist, deren Innenrand im Horizontalschnitt ins Innere der Lärmschutzeinrichtung und deren Außenrand zur Seite gerichtet ist und die die einströmende Luft so umlenken, dass sie ungefähr in Längsrichtung des Flugzeugs in die Triebwerke strömt, mit einem Dach (5) und mit einer der ersten Öffnung gegenüberliegenden hinteren zweiten Öffnung, die von Wänden (1, 3) begrenzt ist, **dadurch gekennzeichnet, dass** die Größe der zweiten Öffnung durch Bewegung eines Teils der Wände (3) veränderbar ist, so dass das Flugzeug durch diese von hinten in die Lärmschutzhalle hineingefahren werden kann, dass mindestens ein Teil der Wände (3) in Längsrichtung derselben verschiebbar ist, dass der verschiebbare Teil der Wände (3) quer zur Längsachse der Lärmschutzeinrichtung in unterschiedlichen Winkeln, z. B. unter einem rechten Winkel, ausgerichtet und mit Öffnungen (12) für die Triebwerksstrahlen des Flugzeugs ausgebildet ist.

3. Lärmschutzeinrichtung nach Anspruch 1 oder 2, **dadurch gekennzeichnet, dass** das Dach (5) bis in den Bereich der bewegbaren Wände (3) heranreicht.

4. Lärmschutzeinrichtung nach einem der Ansprüche 1 bis 3, **dadurch gekennzeichnet, dass** wenigstens ein Teil der Wände (3, 9) eine geringere Höhe hat als der Raum unter dem Dach (5).

5. Lärmschutzeinrichtung nach Anspruch 4, **dadurch gekennzeichnet, dass** wenigstens der bewegbare Teil der Wände (3) ungefähr die halbe Höhe des Raumes unter dem Dach (5) hat.

6. Lärmschutzeinrichtung nach einem der Ansprüche 1 bis 5, **dadurch gekennzeichnet, dass** sie als erweiterbares Baukastensystem ausgebildet ist.

7. Lärmschutzeinrichtung nach einem der Ansprüche 1 bis 6, **dadurch gekennzeichnet, dass** sie eine hinter die zweite Öffnung verfahrbare Wand (9) aufweist.

8. Lärmschutzeinrichtung nach Anspruch 7, **dadurch gekennzeichnet, dass** die verfahrbare Wand (9) an ihrer zur zweiten Öffnung gerichteten Seite mit einer insbesondere gewölbten Schrägfläche versehen ist, mit der die Abgase und Lärm nach oben umgelenkt werden.

9. Lärmschutzeinrichtung nach Anspruch 7 oder 8, **dadurch gekennzeichnet, dass** verfahrbare Wandbereiche (9) an ihrer von der zweiten Öffnung weggerichteten Seite mit Stützen versehen sind.

10. Lärmschutzeinrichtung nach Anspruch 9, **dadurch gekennzeichnet, dass** die Stützen als insbesondere gewölbte Schrägflächen ausgebildet sind, durch die auf die zweite Öffnung gerichtete Luftströmungen nach oben umgelenkt werden.

## Claims

1. Noise insulation device for aircraft (8) with a first opening which is delimited by a series of conducting surfaces (4), the inner edge of which is directed, in horizontal section, into the interior of the noise insulation device and the outer edge of which is directed toward the side and which conducting surfaces (4) deflect the inflowing air in such a manner that it flows approximately in the longitudinal direction of the aircraft into the engines, with a roof (5) and with a rear, second opening which is situated opposite the first opening and is delimited by walls (1, 3), **characterized in that** the size of the second opening can be changed by movement of one part of the walls (3) such that the aircraft can be brought backwards through the second opening into the noise insulation hangar **in that** the walls (3) are angled in such a manner that the region enclosed by them tapers from the first opening to the second opening, **in that** the roof (5) covers only a part of the noise insulation device, which part is adjacent to the first opening, and **in that** the walls (3) are at least partially pivotable about vertical axes or are displaceable in the longitudinal direction.

2. Noise insulation device for aircraft (8) with a first opening which is delimited by a series of conducting surfaces (4), the inner edge of which is directed, in horizontal section, into the interior of the noise insulation device and the outer edge of which is directed toward the side and which conducting surfaces (4) deflect the inflowing air in such a manner that it flows approximately in the longitudinal direction of the aircraft into the engines, with a roof (5) and with a rear, second opening which is situated opposite the first opening and is delimited by walls (1, 3), **characterized in that** the size of the second opening can be changed by movement of one part of the walls (3) such that the aircraft can be brought backwards through the second opening into the noise insulation hangar, **in that** at least one part of the walls (3) is displaceable in the longitudinal direction of the same, **in that** the displaceable part of the walls (3) is oriented at different angles, for example at a right angle, transversely with respect to the longitudinal axis of the noise insulation device and is designed with openings (12) for the engine jets of the aircraft.

3. Noise insulation device according to Claim 1 or 2, **characterized in that** the roof (5) reaches into the region of the movable walls (3).

4. Noise insulation device according to one of Claims 1 to 3, **characterized in that** at least one part of the walls (3, 9) has a lower height than the space below the roof (5).

5. Noise insulation device according to Claim 4, **characterized in that** at least the movable part of the walls (3) is approximately half the height of the space below the roof (5).

6. Noise insulation device according to one of Claims 1 to 5, **characterized in that** it is designed as an expandable modular system.

7. Noise insulation device according to one of Claims 1 to 6, **characterized in that** it has a wall (9) which is movable behind the second opening.

8. Noise insulation device according to Claim 7, **characterized in that** the movable wall (9) is provided, on its side directed toward the second opening, with an, in particular, curved oblique surface with which the exhaust gases and noise are deflected upward.

9. Noise insulation device according to Claim 7 or 8, **characterized in that** movable wall regions (9) are provided, on their side directed away from the second opening, with supports.

10. Noise insulation device according to Claim 9, **characterized in that** the supports are designed as, in particular, curved oblique surfaces by means of which air flows directed onto the second opening are deflected upward.

## Revendications

1. Système d'insonorisation pour avions (8), comportant une première ouverture, qui est délimitée par une série de surfaces conductrices (4), dont le bord intérieur sur une coupe horizontale est dirigé vers l'intérieur du système d'insonorisation et dont le bord extérieur est dirigé vers le côté, et qui font dévier l'air affluant, de telle sorte qu'il circule à peu près dans la direction longitudinale de l'avion vers les turbines, comportant un toit (5) et une deuxième ouverture arrière, située en face de la première ouverture et délimitée par des parois (1, 3), **caractérisé en ce qu'**il est possible de faire varier la dimension de la deuxième ouverture sous l'effet d'un déplacement d'une partie des parois (3), de telle sorte que l'avion peut être conduit à l'intérieur de la halle insonorisée à travers ladite ouverture par l'arrière, **en ce que** les parois (3) sont pliées de telle sorte que la zone délimitée par celles-ci se rétrécit depuis la première ouverture vers la deuxième ouverture, **en ce que** le toit (5) ne couvre qu'une partie du système d'insonorisation, celle adjacente à la première ouverture, et **en ce que** les parois (3) sont aptes à pivoter au moins en partie autour d'axes verticaux ou sont aptes à être déplacées dans la direction longitudinale.

2. Système d'insonorisation pour avions (8) comportant une première ouverture, qui est délimitée par une série de surfaces conductrices (4), dont le bord intérieur sur une coupe horizontale est dirigé vers l'intérieur du système d'insonorisation et dont le bord extérieur est dirigé vers le côté, et qui font dévier l'air affluant, de telle sorte qu'il circule à peu près dans la direction longitudinale de l'avion vers les turbines, comportant un toit (5) et une deuxième ouverture arrière, située en face de la première ouverture et délimitée par des parois (1, 3), **caractérisé en ce qu'**il est possible de faire varier la dimension de la deuxième ouverture sous l'effet d'un déplacement d'une partie des parois (3), de telle sorte que l'avion peut être conduit à l'intérieur de la halle insonorisée à travers ladite ouverture par l'arrière, **en ce qu'**au moins une partie des parois (3) sont aptes à être déplacées dans la direction longitudinale de celles-ci, **en ce que** la partie mobile des parois (3) est orientée transversalement à l'axe longitudinal du système d'insonorisation en formant différents angles, tels qu'un angle droit, et est réalisée avec des ouvertures (12) pour les jets de turbine de l'avion.

3. Système d'insonorisation selon la revendication 1 ou 2, **caractérisé en ce que** le toit (5) s'avance jusque dans la zone des parois (3) mobiles.

4. Système d'insonorisation selon l'une quelconque des revendications 1 à 3, **caractérisé en ce qu'**au moins une partie des parois (3, 9) a une plus faible hauteur que l'espace en dessous du toit (5).

5. Système d'insonorisation selon la revendication 4, **caractérisé en ce qu'**au moins la partie mobile des parois (3) a une hauteur égale à peu près à la moitié de la hauteur de l'espace en dessous du toit (5).

6. Système d'insonorisation selon l'une quelconque des revendications 1 à 5, **caractérisé en ce qu'**il est réalisé sous forme de système modulaire évolutif.

7. Système d'insonorisation selon l'une quelconque des revendications 1 à 6, **caractérisé en ce qu'**il comporte une paroi (9) apte à être déplacée derrière la deuxième ouverture.

8. Système d'insonorisation selon la revendication 7, **caractérisé en ce que** la paroi (9) mobile, sur sa face orientée vers la deuxième ouverture, est munie d'une surface oblique bombée en particulier, par laquelle les gaz d'échappement et le bruit sont déviés vers le haut.

9. Système d'insonorisation selon la revendication 7 ou 8, **caractérisé en ce que** les zones de paroi (9) mobiles, sur leur face détournée de la deuxième ouverture, sont munies de supports.

10. Système d'insonorisation selon la revendication 9, **caractérisé en ce que** les supports sont réalisés sous la forme de surfaces obliques bombées en particulier, par lesquelles les flux d'air dirigés sur la deuxième ouverture sont déviés vers le haut.
